# EUROPEAN PATENT APPLICATION

(11) **EP 2 045 658 A1**
(43) Date of publication of application: **08.04.2009**
(21) Application number: 08017031.9
(22) Date of filing: 26.09.2008
(51) Int. Cl.: G03B 5/00, H04N 5/232, G02B 27/64

(54) **Lens device**

(30) Priority: 03.10.2007 JP 2007260248
(71) Applicant: Fujinon Corporation, Saitama-shi, Saitama (JP)
(72) Inventor: Ozaki, Takao, Saitama-shi Saitama (DE); Nagata, Koichi, Saitama-shi Saitama (DE); Horio, Motohiko, Saitama-shi Saitama (DE)
(74) Representative: Höhfeld, Jochen

(57) **Abstract**

A lens device is provided and includes: a housing having a first fixed axis in a transverse direction and a second fixed axis in a longitudinal direction; a first slider supported so as to be slidable along the first fixed axis; a second slider supported so as to be slidable along the second fixed axis; a first movement bar fixed to the first slider in the longitudinal direction; a second movement bar fixed to the second slider in the transverse direction; and a lens holding frame supported so as to be slidable along the first movement bar and the second movement bar. The lens holding frame has two recessed engagement sections open in two different directions, and one of the first and second movement axes is inserted into and engaged with the two recessed engagement sections.

## Description

This application is based on and claims priority under 35 U.S.C §119 from Japanese Patent Application No. 2007-260248, filed on September 30, 2007, the entire disclosure of which is herein incorporated by reference.

### BACKGROUND OF THE INVENTION

### 1. Field of the Invention

The present invention relates to a lens device, and more particularly to a lens device which is provided in a portable imaging device and which has an image blur compensator.

### 2. Description of Related Art

In an image blur compensator, a correction lens is supported so as to be freely movable in a plane perpendicular to a photographic optical axis. When vibrations are exerted on a camera, the correction lens is moved by means of an actuator in a direction for canceling image movement. For instance, in an image blur compensator described in Japanese Patent No. 2641172, a fixed frame of a correction lens is held by a first holding frame so as to become freely movable in the pitch direction, and the first holding frame is held by a second holding frame so as to become freely movable in a yaw direction. By means of a pitch coil attached to the fixed frame and a yaw coil attached to the first holding frame, the correction lens is moved in either the pitch direction or the yaw direction, thereby compensating for image blur.

However, in the image blur compensator of Japanese Patent No. 2641172, the first holding frame is attached onto the second holding frame. Hence, when the second holding frame is moved, the first holding frame is moved as well, and the lens is moved at low speed, so that high-precision image blur compensation cannot be performed.

In view of the above, an image blur compensator of JP-A-2006-215095 has two sliders for performing sliding actions independently of a housing (a main body), and the sliders are separately engaged with a lens holding frame. Specifically, in JP-A-2006-215095, two movement guide bars are attached to the lens holding frame in different directions, and the sliders are engaged with the two movement guide bars, respectively. The two sliders are separately supported by two fixed guide bars secured to the housing and can perform sliding actions along the fixed guide bars. Consequently, in the image blur compensator of JP-A-2006-215095, the lens holding frames can independently move in two directions, so that the lens holding frame can be moved quickly and that high-precision image blur compensation can be performed.

Incidentally, in the lens device of JP-A-2006-215095, a round opening is formed, in a penetrating fashion, in a slider, and a movement guide bar is inserted into the round opening, whereby the slider is slidably supported along the movement guide bar. When the lens device of such a configuration is assembled, the movement guide bar must be inserted into the round opening while the slider and a lens holding frame are held, which in turn raises a problem of involvement of very laborious operation. Such a problem can be solved by making the diameter of the round opening great with respect to the diameter of the movement guide bar or changing the round opening to a recessed groove. In such a case, rattling arises between the slider and the lens holding frame, which raises a problem of a failure to move the lens holding frame with high accuracy.

### SUMMARY OF THE INVENTION

An object of an illustrative, non-limiting embodiment of the invention is provide a lens device, which is easy to assemble and which can move a lens holding frame with good accuracy.

According to an aspect of the invention, there is provided a lens device comprising: a housing having a first fixed axis which is fixed to the housing in a transverse direction and a second fixed axis which is fixed to the housing in a longitudinal direction; a first slider supported so as to be slidable along the first fixed axis; a second slider supported so as to be slidable along the second fixed axis; a first movement bar fixed to the first slider in the longitudinal direction; a second movement bar fixed to the second slider in the transverse direction; and a lens holding frame that holds a lens and is supported so as to be slidable along the first movement bar and slidable along the second movement bar, the first and second sliders being slid with respect to the housing so as to move the lens holding frame in a plane perpendicular to an optical axis of the lens, wherein the lens holding frame has two recessed engagement sections open in two different directions, and one of the first and second movement axes is inserted into and engaged with the two recessed engagement sections.

According to an aspect of the invention, the two recessed engagement sections are engaged with the movement axis. Hence, occurrence of excessive constraint force can be prevented, and the lens holding frame can be smoothly moved. Further, according to an aspect of the invention, since the two recessed engagement sections are open in two different directions, sliding force of the slider can be transmitted to the lens holding frame without fail during sliding action of the slider while the lens holding frame keeps sliding along the movement axis. Moreover, according to an aspect of the invention, it is required only to engage the two recessed engagement sections with the movement axis, and hence operation of attaching the lens holding frame can be performed readily. In an aspect of the invention, it is required that the longitudinal direction and the transverse direction are two different directions perpendicular to an optical axis, and the longitudinal direction and the transverse direction may also be inverted.

In an aspect of the invention, an opening portion in each of the two recessed engagement sections may widen outwardly According to this aspect, the recessed tip ends of the engagement sections are formed so as to become wider. Hence, the movement axis can be readily inserted into and engaged with the two engagement sections, so that, for instance, the lens holding frame can be attached to the movement axis fixed to the slider.

In aspect of the invention, each of inside lateral surfaces in each of the two recessed engagement sections may have a projection section extended continually in a direction perpendicular to one of the first and second movement axes.

According to this aspect, the movement axis is brought into contact with the inside lateral surfaces. Hence, a given contact area exists all times between the movement axis and the engagement sections. Consequently, the lens holding frame can be slid stably at all times with respect to the movement axis, and the movement of the lens holding frame can be stabilized.

### BRIEF DESCRIPTION OF THE DRAWINGS

The features of the invention will appear more fully upon consideration of the exemplary example of the invention, which are schematically set forth in the drawings, in which:
Fig. 1 is a side cross-sectional view showing a lens device of an exemplary embodiment of the invention;
Fig. 2 is a perspective view of a housing including a vibration-proof lens when viewed from the back;
Fig. 3 is a perspective view of the housing shown in Fig. 2 from which an actuator is removed;
Fig. 4 is a view of a vibration-proof mechanism shown in Fig. 3 when viewed from the direction of an optical axis;
Fig. 5 is a view of a vibration-proof mechanism shown in Fig. 4 from which a lens holding frame is removed;
Fig. 6 is a perspective view showing a principal component of the vibration-proof mechanism except the housing;
Fig. 7 is a perspective view showing a guide section of the lens holding frame;
Fig. 8 is a view of a guide section 86 shown in Fig. 7 when viewed in a direction X;
Fig. 9 is a view of a guide section 87 shown in Fig. 7 when viewed in the direction X;
Fig. 10 is an explanatory view showing a method for mounting a lens holding frame; and
Fig. 11 is a perspective view showing a mounted state of the lens holding frame.

### DETAILED DESCRIPTION OF THE EXEMPLARY EMBODIMENTS

Although the invention will be described below with reference to exemplary embodiments thereof, the following exemplary embodiments and modifications do not restrict the invention.

According to an exemplary embodiment of the invention, the two recessed engagement sections of the lens holding frame are open in two different directions. The movement axis is inserted in and engaged with the two recessed engagement sections. Hence, the lens holding frame can be operated without fail in the longitudinal direction and the transverse direction. Further, assembly of the lens device can be readily performed.

A exemplary embodiment of a lens device of the present invention will be described in detail according to the accompanying drawings.

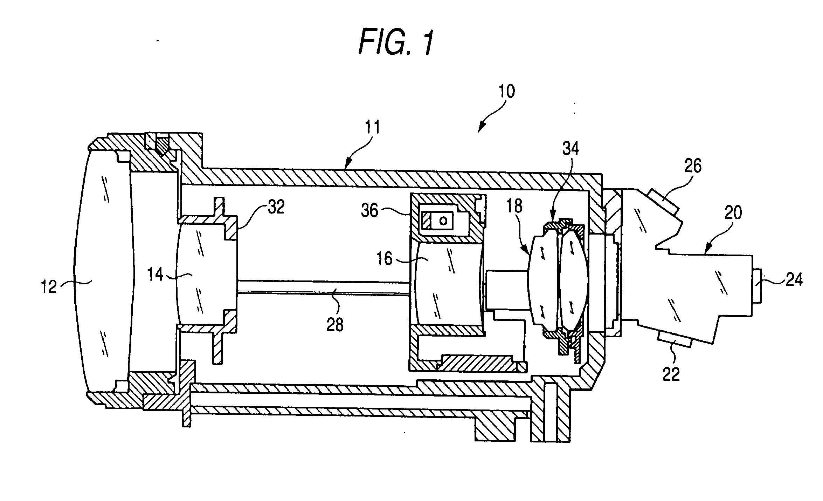

Fig. 1 is a side cross-sectional view of a lens device 10 of an exemplary embodiment. The lens device 10 has a first lens group 12, a second lens group 14, a third lens group 16, and a fourth lens group 18 in order from the front (a subject side) to the rear (an imaging side) along a photographic optical axis. Subject light passed through the first through fourth lens groups 12 to 18 forms an image on imaging elements 22, 24, and 26 disposed at respective R, G, and B exit ends of a color separation prism 20 by way of the color separation prism 20 that constitutes a color separation optical system. The camera main body (not shown) equipped with the lens device 10 has a signal processing circuit (not shown) that subjects image signals from the imaging elements 22, 24, and 26 to processing (white balance processing, y correction, and the like), thereby generating a video signal in a format.

The first lens group 12 is a so-called front lens; the second lens group 14 is a variator lens that changes a focal length; the third lens group 16 is a vibration-proof lens that is driven in a direction for canceling vibrations stemming from hand movement, or the like; and the fourth lens group 18 is a focusing lens that adjusts a focus.

The first through fourth lens groups 12 through 18 are held within a lens barrel main body 11. A pair of guide bars 28 (one of them is not illustrated) parallel to an optical axis are inserted and held in the lens barrel main body 11. A holding frame 32 of the second lens group 14 and the holding frame 34 of the fourth lens group 18 are slidably supported by the pair of guide bars 28, and a housing 36 of the third lens group 16 is secured to the pair of guide bars 28. The housing 36 may also be fixed directly to the lens barrel main body 11.

The second lens group 14 is provided with a nut (not shown) that constitutes a screw feeder, and a feed screw (not shown) constituting the screw feeder is screw-coupled to the nut. The feed screw is positioned in parallel to the optical axis, and the end of the feed screw is coupled to an output shaft of a zooming step motor (not shown). When a zoom signal is output from the camera main body to a zoom driver circuit (not shown) of the zooming step motor, the zooming step motor rotationally drives the feed screw in a direction conforming to the signal; thereby, the second lens group 14 is moved front and back in the direction of the optical axis along the pair of guide bars 28, to thus be adjusted to a desired focal length.

Likewise, the fourth lens group 18 is also equipped with a nut (not shown) constituting a screw feeder, and a feed screw (not shown) constituting the screw feeder is screw-coupled to the nut. The feed screw is positioned in parallel to the optical axis, and an end of the feed screw is coupled to an output shaft of the focusing step motor (not shown). When a focus signal is output from the camera main body to the focus driver circuit (not shown) of the focusing step motor, the focusing step motor rotationally drives the feed screw in a direction conforming to the signal; thereby, the fourth lens group 18 is moved front and back in the direction of the optical axis along the pair of guide bars 28, whereupon a focus is obtained.

Next, a configuration of the vibration-proof mechanism will be described.

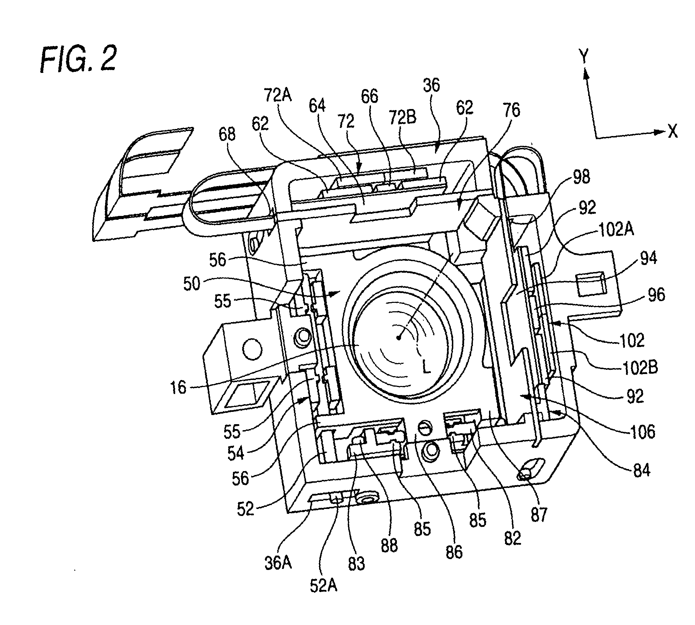

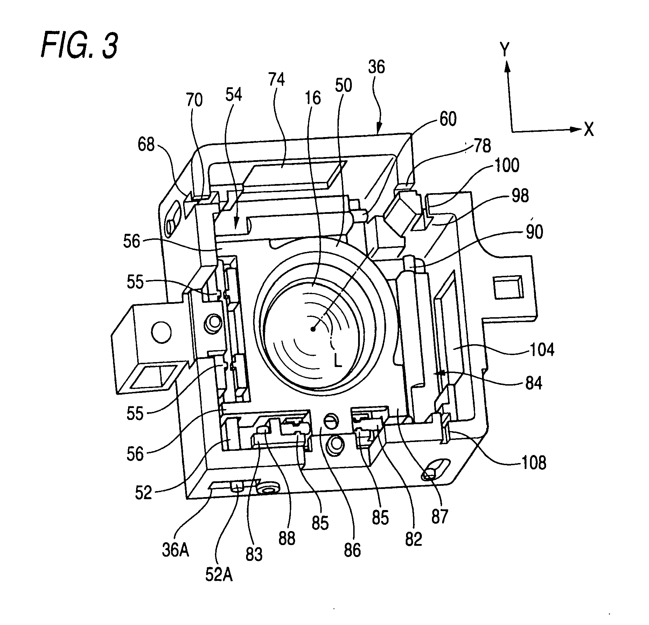

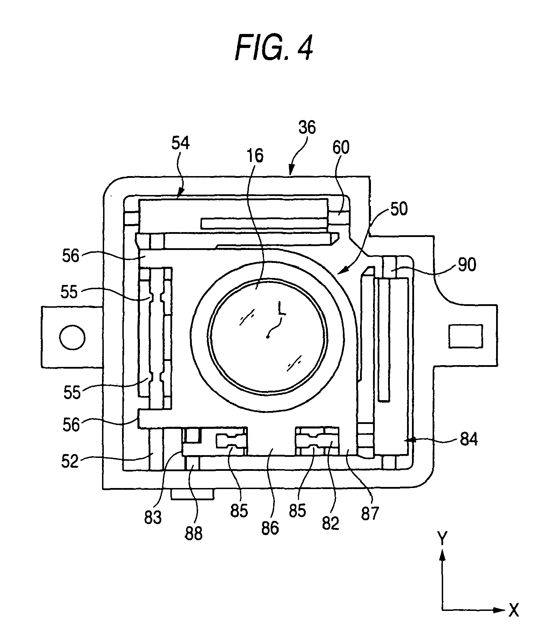

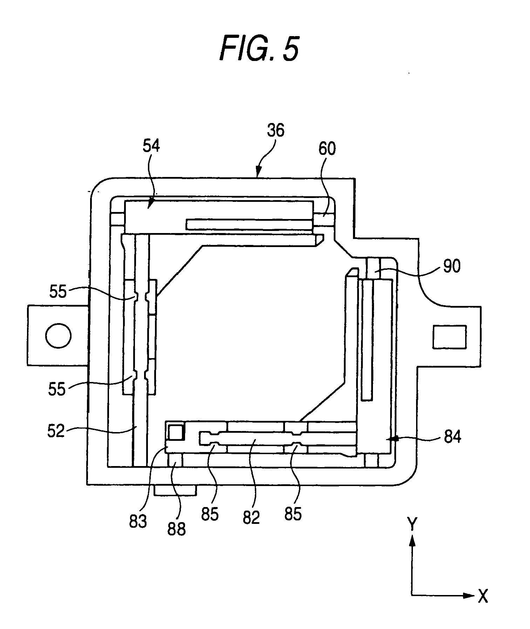

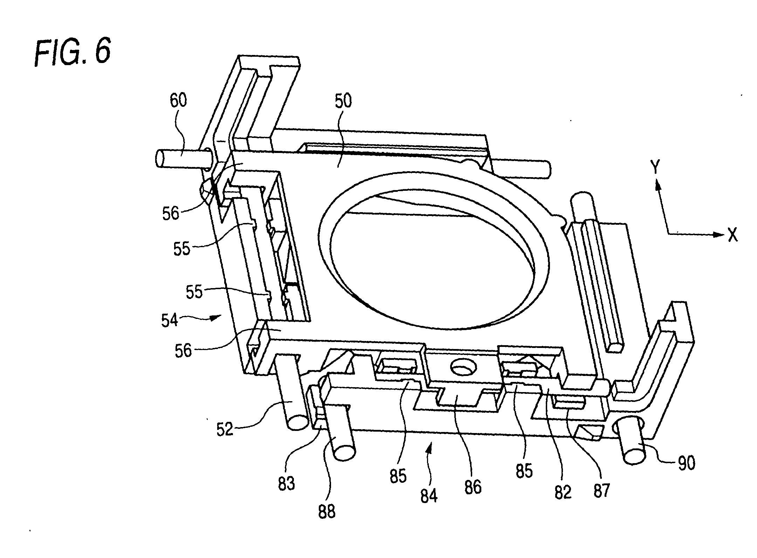

Fig. 2 is a perspective view of the housing 36 equipped with the vibration-proof lens 16 when viewed from the back, and Fig. 3 is a perspective view achieved when the actuator is omitted from the housing 36 shown in Fig. 2. Fig. 4 is a view of the housing 36 shown in Fig. 3 when viewed in the direction of the optical axis L, and Fig. 5 shows a state in which a lens holding frame 50 is removed from Fig. 4. Fig. 6 is a perspective view showing only a principal section of a vibration-proof mechanism.

The third lens group (herein referred to as a "vibration-proof lens" for the sake of convenience) 16 shown in the drawings is supported by the lens holding frame 50, and the lens holding frame 50 is supported so as to be freely movable in two different directions in a plane perpendicular to the photographic optical axis L. The moving directions of the vibration-proof lens 16 are assumed to be a direction X (a transverse direction in Figs. 2 through 5) and a direction Y (a longitudinal direction in Figs. 2 through 5). The mechanism for moving the vibration-proof lens 16 in the direction X is referred to as an X movement mechanism, and a mechanism for moving the vibration-proof lens in the direction Y is referred to as a Y movement mechanism.

First, the X movement mechanism will be described.

As shown in Fig. 5, the housing 36 is attached to a fixed guide bar 60. The fixed guide bar 60 is disposed in the direction X, and both ends of the fixed guide bar are fastened to the housing 36. An upper side portion of the slider 54 formed into the shape of the letter L is engaged with the fixed guide bar 60. A guide opening (not shown) is formed in the upper side portion of the slider 54 in the direction X. As a result of the fixed guide bar 60 being inserted into the guide opening, the slider 54 is supported so as to be slidable in the direction X.

A movement guide bar 52 is attached to a left side portion of the slider 54. The movement guide bar 52 is disposed in the direction Y and fitted into the fitting sections 55, 55 of the slider 54, to thus be secured to the slider 54. As shown in Fig. 4, guide sections 56, 56 of the lens holding frame 50 are engaged with the movement guide bar 52. The guide sections 56, 56 of the lens holding frame 50 are disposed at positions (i.e., upper and lower sides in Fig. 4) outside of the fitting sections 55, 55 of the slider 54. A square opening (not shown) is opened in each of the guide sections 56, 56 so in the direction Y. As a result of the columnar movement guide bar 52 being inserted into the square openings, the lens holding frame 50 is engaged with the slider 54. Hereby, the lens holding frame 50 is configured so as to be able to slide in the direction Y along the movement guide bar 52 and move in the direction X along with the slider 54 in an integrated fashion. As shown in Fig. 2, a lower end 52A of the movement guide bar 52 is engaged with an elongated opening 36A formed in a lower surface of the housing 36 in the direction X, whereby the slider 54 is prevented from swaying in the direction of the optical axis L.

As shown in Fig. 2, a plane motor coil (whose trade name is "Fine Pattern Coil" (Registered Trademark)) 62 is fastened to the upper side portion of the foregoing slider 54, and an output end of a flexible printed board 64 is bonded to a lower surface of the motor coil 62. The motor coil 62 is disposed at an outer perimeter of the vibration-proof lens 16 in the direction X, and a positioning sensor 66, such as the Hall device, is fixedly positioned on the flexible printed board 64.

The flexible printed board 64 is pulled from the motor coil 62 in the direction X and withdrawn to the outside of the housing 36 by way of a side opening 68 of the housing 36. The thus-externally-withdrawn flexible printed board 64 is curved into the shape of the letter U and affixed to an upper surface of the housing 36. Subsequently, the flexible printed board is folded in an overlapping manner and withdrawn to the outside of the lens barrel main body 11 from a predetermined position on the lens barrel main body 11 (see Fig. 1). The thus-withdrawn flexible printed board 64 is connected to a unit that controls power supply and operation of the vibration-proof lens 16. As shown in Fig. 3, the side opening 68 of the housing 36 is brought in mutual communication with an end face of the housing 36 by way of a slit 70. As a result of the flexible printed board 64 being inserted into the slit 70, the flexible printed board 64 is positioned within the side opening 68.

A magnet 72 is disposed opposite and outside of the motor coil 62. The magnet 72 is formed into the shape of a rectangular plate by arranging two magnet pieces 72A and 72B in the direction X and configured in such a way that the south pole and the north pole are arranged in the direction X and that the south pole and the north pole become different from each other even on the upper and lower surfaces of the magnet pieces. The foregoing position sensor 66 is disposed opposite the center of the magnet 72 in the direction X (i.e., a boundary between the magnet pieces 72A and 72B); detects a change in the magnetic field; and outputs the thus-detected signal to the unit by way of the flexible printed board 64.

A metal plate (not shown) that is to become a yoke is provided outside of the magnet 72. The metal plate is attracted to the magnet 72 by means of magnetic force of the magnet 72. The metal plate is formed into a rectangular shape that is larger than the magnet 72 and attached while four edges of the plate protrude from the magnet 72. A recess equal in size to the metal plate is formed in an exterior surface of the housing 36, and an opening 74 equal in size to the magnet 72 is further formed in the recess in a penetrating manner. Thus, the metal plate is housed in the recess of the housing 36, and the magnet 72 is housed into the opening 74.

The metal plate 76 that is to sever as a yoke is disposed in and opposite the motor coil 62 along the direction X. One end of the metal plate 76 is inserted into the slit 70, and the other end of the metal plate is inserted into a groove 78 formed in the housing 36, to thus be fixed to the housing 36.

In the X movement mechanism configured as mentioned above, the motor coil 62 is disposed within a magnetic field generated by the magnet 72 and the two metal plates 76 (one is not illustrated); hence, the motor coil 62 and the slider 54 supporting the motor coil undergo force in the direction X as a result of the motor coil 62 being energized. Consequently, the slider 54 and the lens holding frame 50 are moved in the direction X, whereby the vibration-proof lens 16 is moved in the direction X. The above refers to the structure of the X movement mechanism.

The Y movement mechanism will now be described.

As shown in Fig. 5, the housing 36 is provided with the fixed guide bar 90. The fixed guide bar 90 is disposed in the direction Y, and both ends of the fixed guide bar are fixed to the housing 36. An upper side portion of the slider 84 formed into an L-shaped geometry is engaged with the fixed guide bar 90. A guide opening (not shown) is formed in the upper side portion of the slider 84 in the direction Y, and the fixed guide bar 90 is inserted into the guide opening, whereby the slider 84 is supported so as to be freely slidable in the direction Y.

A movement guide bar 82 is attached to a lower side portion of the slider 84. The movement guide bar 82 is disposed in the direction X and fitted into fitting sections 85, 85 of the slider 84, to thus be secured to the slider 84. As shown in Fig. 4, guide sections 86, 87 of the lens holding frame 50 are engaged with the movement guide bar 82. The guide section 86 of the lens holding fame 50 is located between the fitting sections 85, 85 of the slider 84, and a cross section of the guide section 86 orthogonal to the X axis is formed into the shape of a recess opened in one side of the optical axis L. In the meantime, the guide section 87 is disposed outside of the fitting sections 85, 85, and a cross section of the guide section 87 orthogonal to the X axis is formed into the shape of a recess opened to the outside (a lower side in the drawing). The movement guide bar 82 is inserted into these guide sections 86, 87, whereby the lens holding frame 50 is engaged with the slider 84. Thereby, the lens holding frame 50 is configured so as to be able to slide in the direction X along the movement guide bar 82 and move in the direction Y along with the slider 84 in an integrated fashion.

As shown in Fig. 6, the slider 84 is provided with a guide section 83. The guide section 83 is provided at a leading end (a left end) of the lower side portion of the slider 84, and the leading end side (the left side) is formed into the shape of an opened recess. A guide bar 88 is inserted into the guide section 83 and engaged in a slidable manner. The guide bar 88 is disposed in the direction Y, and ends of the guide bar 88 are fixed to the housing 36 (see Fig. 5). Hereby, the guide bar 88 can prevent the slider 84 from swaying (or tilting) in the direction of the optical axis L.

As shown in Fig. 2, a plane motor coil (whose trade name is "fine pattern coil" (Registered Trademark)) 92 is fixed to a right side portion of the foregoing slider 84, and an output terminal of a flexible printed board (hereinafter called a "flexible printed board") 94 is bonded to the left surface of the motor coil 92. The motor coil 92 is disposed in the outer perimeter of the vibration-proof lens 16 in the direction Y, and a positioning sensor 96, such as a Hall device, is fixedly positioned on the flexible printed board 94.

The flexible printed board 94 is withdrawn from the motor coil 92 in the direction Y and to the outside of the housing 36 by way of the side opening 98 of the housing 36. The thus-externally-withdrawn flexible printed board 94 is curved into the shape of the letter U and affixed to the external side surface of the housing; is subsequently folded and superimposed; and is further superimposed on the flexible printed board 64 on the upper surface of the housing 36 (see Fig. 1). The thus-withdrawn flexible printed board 94 is connected to a unit that controls power supply and operation of the vibration-proof lens 16. The side opening 98 of the housing 36 is brought in mutual communication with an end face of the housing 36 by way of a slit 100. As a result of the flexible printed board 94 being inserted into the slit 100, the flexible printed board 94 is positioned within the side opening 98.

A magnet 102 is disposed opposite and outside of the motor coil 92. The magnet 102 is formed into the shape of a rectangular plate by arranging two magnet pieces 102A and 102B in the direction Y and configured in such a way that the south pole and the north pole are arranged in the direction Y and that the south pole and the north pole become different from each other even on the right and left surfaces of the magnet pieces. The foregoing position sensor 96 is disposed opposite the center of the magnet 102 in the direction Y (i.e., a boundary between the magnet pieces 102A and 102B); detects a change in the magnetic field; and outputs the thus-detected signal to the unit by way of the flexible printed board 94.

A metal plate (not shown) that is to become a yoke is provided outside of the magnet 102. The metal plate is attracted to the magnet 102 by means of magnetic force of the magnet 102. The metal plate is formed into a rectangular shape that is larger than the magnet 102 and attached while four edges of the plate protrude from the magnet 102. A recess equal in size to the metal plate is formed in an exterior surface of the housing 36, and an opening 104 equal in size to the magnet 102 is further formed in the recess in a penetrating manner. Thus, the metal plate is housed in the recess of the housing 36, and the magnet 102 is housed into the opening 104.

The metal plate 106 that is to serve as a yoke is disposed in and opposite the motor coil 92 along the direction Y. One end of the metal plate 106 is inserted into the slit 100, and the other end of the metal plate is inserted into a groove 108 formed in the housing 36, to thus be fixed to the housing 36.

In the Y movement mechanism configured as mentioned above, the motor coil 92 is disposed within a magnetic field generated by the magnet 102 and the two metal plates 106 (one is not illustrated); hence, the motor coil 92 and the slider 84 supporting the motor coil undergo force in the direction Y as a result of the motor coil 92 being energized. Consequently, the slider 84 and the lens holding frame 50 are moved in the direction Y, whereby the vibration-proof lens 16 is moved in the direction Y. The above refers to the structure of the vibration-proof mechanism.

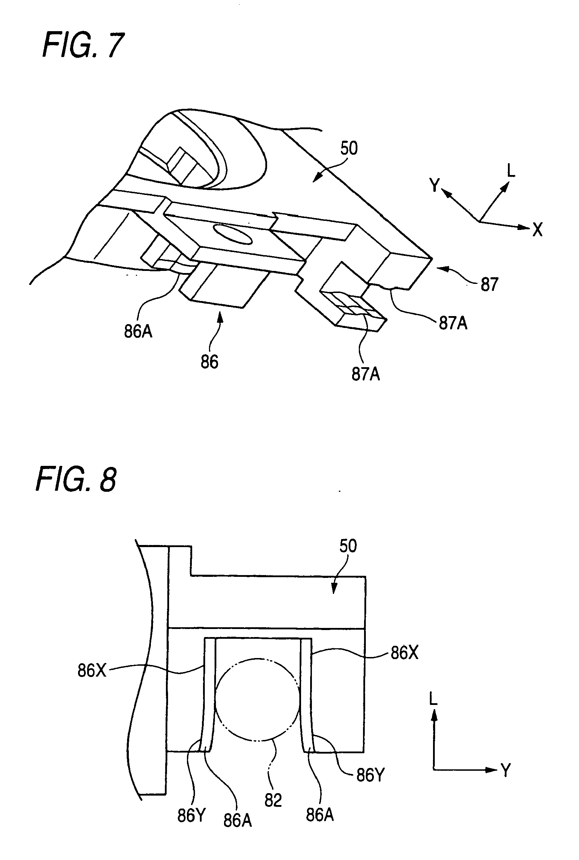

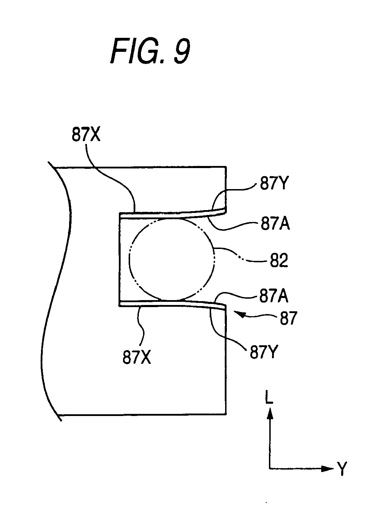

Guide sections 86 and 87 of the lens holding frame 50 that are features of the present invention will now be described by reference to Figs. 7 through 9. Fig. 7 is a perspective view showing the guide sections 86 and 87, and Figs. 8 and 9 are views of the guide sections 86 and 87 when viewed in the direction X.

As shown in Fig. 8, the guide section 86 of the lens holding frame 50 is formed into a recessed shape when viewed in the direction X and open to one side along the optical axis L (lower sides in Figs. 7 and 8). Projection portion 86A, 86A are formed on both lateral surfaces of the recessed guide section 86. The projection portions 86A, 86A are bulgingly formed so as to be continual in the direction of the optical axis L, and a cross-sectional profile of the projection portion is a semicylindrical shape including an arched bulge. The movement guide bar 82 is inserted into the recessed guide section 86 as indicated by a two-dot chain line in Fig. 8, and the movement guide bar 82 contacts the projection portions 86A, 86A. Therefore, the movement guide bar 82 makes point contact with the projection portions 86A, 86A on both lateral sides. Since a constant contact area exists between the movement guide bar 82 and the guide section 86 at all times, motion of the lens holding frame can be stabilized when the lens holding frame 50 is moved along the movement guide bar 82.

The guide section 86 is formed in such a way that an opening of the guide section becomes wider. Specifically, the guide section 86 has side surfaces 86X, 86X formed in parallel to each other and side surfaces 86Y, 86Y formed on open sides of the guide section such that a space between the side surfaces becomes greater toward an open end. Consequently, when the movement guide bar 82 is inserted into the recessed guide section 86, the side surfaces 86Y, 86Y act as guides, so that the movement guide bar 82 can be smoothly inserted between the side surfaces 86X, 86X.

In the meantime, as shown in Fig. 9, the guide section 87 of the lens holding frame 50 is formed so as to assume an recessed shape when viewed in the direction X and to become open to the direction Y and the outside of the lens holding frame 50 (rightward directions in Figs. 7 and 9). Projection portions 87A, 87A are formed on both lateral surfaces of the recessed guide section 87. The projection portions 87A, 87A are formed so as to be continual in the direction Y, and a cross-sectional profile of the projection portion is a semicylindrical shape including an arched bulge. The movement guide bar 82 is inserted into the recessed section 87 as indicated by a two-dot chain line in Fig. 9, and the movement guide bar 82 contacts the projection portions 87A, 87A. Therefore, the movement guide bar 82 makes point contact with the projection portions 87A, 87A on both lateral sides. Since a constant contact area exists between the movement guide bar 82 and the guide section 87 at all times, motion of the lens guide holding frame can be stabilized when the lens holding frame 50 is moved along the movement guide bar 82.

The guide section 87 is formed in such a way that an opening of the guide section becomes wider. Specifically, the guide section 87 has side surfaces 87X, 87X formed in parallel to each other and side surfaces 87Y, 87Y formed on open sides of the guide section such that a space between the side surfaces becomes greater toward an open end. Consequently, when the movement guide bar 82 is inserted into the recessed guide section 87, the side surfaces 87Y, 87Y act as guides, so that the movement guide bar 82 can be smoothly inserted between the side surfaces 87X, 87X.

The lens holding frame 50 configured as mentioned above is attached to the slider 84 in the following manner.

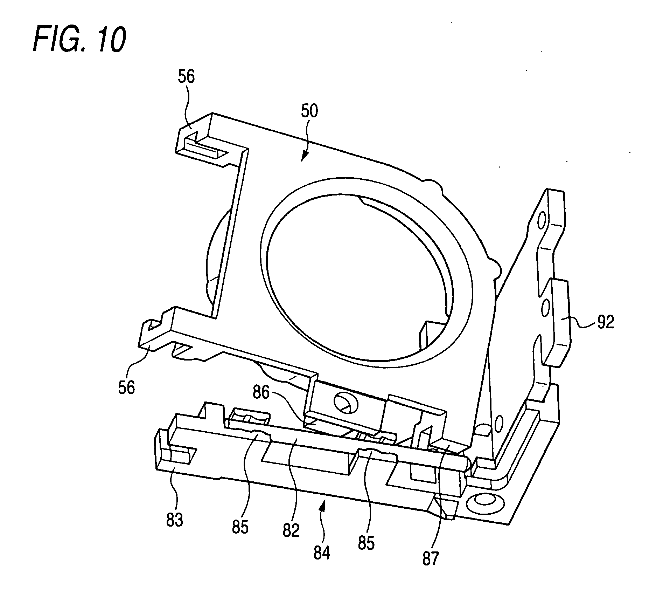

First, the movement guide bar 82 and the motor coil 92 are attached to the slider 84 as shown in Fig. 10, thereby assembling the slider 84. At this time, after being fitted into the fitting sections 85, 85 of the slider 84, the movement guide bar 82 is fixed by means of an adhesive.

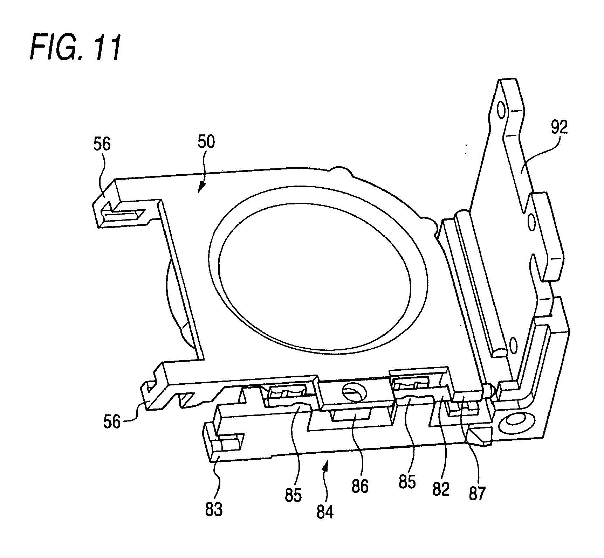

Next, the guide section 87 and the guide section 86 of the lens holding frame 50 are engaged in this sequence with the movement guide bar 82 secured to the slider 84. At this time, as shown in Fig. 10, the guide section 87 is engaged with the movement guide bar 82 while the lens holding frame 50 is placed in an obliquely-standing manner with respect to the slider 84 (specifically, the guide section 86 is positioned above the movement guide bar 82). After the guide section 87 has been engaged with the movement guide bar 82, the lens holding frame 50 is tilted, to thus cause the guide section 86 to engage with the movement guide bar 82. Thereby, as shown in Fig. 11, the movement guide bar 82 can be engaged with the lens holding frame 50.

In the lens device 10 of the present embodiment, the guide sections 86, 87 of the lens holding frame 50 are formed into a recessed shape, and hence the lens holding frame 50 can be attached to the slider 84 after the movement guide bar 82 has been fixed to the slider 84. Consequently, it is not necessary to simultaneously handle the slider 84, the lens holding frame 50, and the movement guide bar 82, which would otherwise be required when a round opening is formed in the slider 84 and the movement guide bar 82 is inserted into the opening, and the lens holding frame 50 can be readily attached to the slider 84. In the present embodiment, since the movement guide bar 82 can be previously fixed to the slider 84 by means of an adhesive, application of an adhesive is not required when the lens holding frame 50 is attached. Therefore, adhesion of an adhesive to a member, such as the lens holding frame 50, can be prevented.

In the present embodiment, the recessed openings of the guide sections 86, 87 are formed into a wide-tipped shape, and therefore the guide sections 86, 87 can be readily engaged with the movement guide bar 82.

In the present embodiment, since the guide sections 86 and 87 are formed into the recessed shape, excessive restraint force does not act between the movement guide bar 82 and the lens holding frame 50, and the lens holding frame 50 can be smoothly moved.

In the present embodiment, the guide sections 86, 87 are opened in different directions. When the guide sections 86, 87 are engaged with the movement guide bar 82, the lens holding frame 50 can be moved in both directions; namely, the direction X and the direction Y, without fail. Specifically, when the lens holding frame 50 is moved in the direction X by means of the X movement mechanism, the guide sections 86, 87 serve as guides to thus enable movement of the lens holding frame in the direction X along the movement guide bar 82 without fail. When the slider 84 is moved in the direction Y by means of the Y movement mechanism, drive force can be transmitted to the lens holding frame 50 by means of the guide section 86, so that the lens holding frame 50 can be reliably moved in the direction Y.

In the foregoing embodiment, the present invention is applied to the mechanism for engagement between the movement guide bar 82 and the guide sections 86, 87. However, the present invention may also be applied to a mechanism for engagement between the movement guide bar 52 and the guide sections 56, 56. Specifically, the guide sections 56, 56 may also be formed into recessed shapes opened in different directions, and the guide sections 56, 56 may also be engaged with the movement guide bar 52.

In the foregoing embodiment, the projection portions 86A, 87A are formed into a semicylindrical shape including a semicircular cross-sectional profile. However, the shape of the projection portions 86A, 87A is not limited to such a shape and may also be a triangular cross-sectional profile.

## Claims

1. A lens device comprising:
a housing having a first fixed axis which is fixed to the housing in a transverse direction and a second fixed axis which is fixed to the housing in a longitudinal direction;
a first slider supported so as to be slidable along the first fixed axis;
a second slider supported so as to be slidable along the second fixed axis;
a first movement bar fixed to the first slider in the longitudinal direction;
a second movement bar fixed to the second slider in the transverse direction; and
a lens holding frame that holds a lens and is supported so as to be slidable along the first movement bar and slidable along the second movement bar, the first and second sliders being slid with respect to the housing so as to move the lens holding frame in a plane perpendicular to an optical axis of the lens,
wherein
the lens holding frame has two recessed engagement sections open in two different directions, and one of the first and second movement axes is inserted into and engaged with the two recessed engagement sections.

2. The lens device according to claim 1, wherein an opening portion in each of the two recessed engagement sections widens outwardly.

3. The lens device according to claim 1 or 2, wherein each of inside lateral surfaces in each of the two recessed engagement sections has a projection section extended continually in a direction perpendicular to one of the first and second movement axes.
